Europäisches Patentamt

European Patent Office

Office européen des brevets

(19)

(11) Publication number: **0 323 070**
**A2**

## (12) EUROPEAN PATENT APPLICATION

(21) Application number: **88311764.0**

(22) Date of filing: **13.12.88**

(51) Int. Cl.⁴: **B60K 41/02**

(30) Priority: **31.12.87 US 139893**

(43) Date of publication of application:
**05.07.89 Bulletin 89/27**

(84) Designated Contracting States:
**DE ES FR GB IT NL SE**

(71) Applicant: **DANA CORPORATION (a Virginia corporation)**
**4500 Dorr Street**
**Toledo, OH 43615(US)**

(72) Inventor: **Jones, Charles R.**
**7880 Head-O-Lake Road**
**Ottawa Lake Michigan 49267(US)**

(74) Representative: **Cheyne, John Robert Alexander Mackenzie et al**
**HASELTINE LAKE & CO. 28 Southampton Buildings Chancery Lane**
**London WC2A 1AT(GB)**

(54) **Integrated engine/clutch control.**

(57) An integrated clutch control system for automatically controlling the engine speed in a predetermined manner during initial clutch engagement when starting a vehicle from rest. In particular, the control functions to prevent engine speeds above a predetermined constant idle speed until the clutch has been engaged to at least a predetermined point. The control can be utilized with either an automated mechanical transmission having an automatically engaged clutch, or a conventional transmission having a manually controlled clutch. Preferably; the control is utilized in conjunction with vehicle engines having an electronic engine govenor with isochronous idle.

FIG. 3

EP 0 323 070 A2

## INTEGRATED ENGINE/CLUTCH CONTROL

### BACKGROUND OF THE INVENTION

The present invention relates generally to an integrated engine/clutch control system and, in particular, to a control system which automatically controls the engine speed in a predetermined manner during initial engagement of the clutch when the vehicle is starting from rest.

Many vehicles, including automobiles, trucks and busses, are provided with manual transmissions which require driver operation of a clutch in order to shift the transmission between various gear ratios. In order to start such a vehicle from rest, the vehicle driver, after disengaging the clutch and placing the transmission in gear, must skillfully engage the clutch in a controlled manner so as to smoothly accelerate the vehicle. Normally, in order to prevent stalling of the engine, the driver simultaneously depresses the vehicle accelerator pedal to increase engine speed as the clutch becomes engaged and begins to load the engine.

Recently, some vehicles, especially trucks, are being provided with what has become known as an automated mechanical transmission. This type of transmission is very similar in construction to a conventional clutch/manual transmission system, except that it is provided with a separate clutch actuator for automatically controlling the engagement of the clutch during initial starting of the vehicle, and also during the gear shifting operations. Thus, the driver is not required to operate a clutch pedal when shifting gears. Further, in addition to automatic clutch actuators, some automated mechanical transmissions are provided with a gear actuating mechanism which will automatically shift the gears of the transmission in accordance with predetermined operating conditions.

In some automated clutch control systems, the engine speed is controlled in a predetermined manner during initial engagement of the clutch. For example, U.S. Patent No. 4,632,231 discloses an automatic clutch control which, during a vehicle start, controls the engagement of the clutch to maintain the engine rpm above a predetermined limit selected in accordance with the detected extent of engagement of the clutch. In this patent, the vehicle throttle is controlled in order to maintain the engine speed at a predetermined rpm above normal idle speed during a vehicle start.

### SUMMARY OF THE INVENTION

The present invention concerns an integrated engine/clutch control system which functions to maintain the engine speed at a predetermined relatively constant idle speed during a vehicle start as the clutch is engaged to begin moving the vehicle. The present invention can be utilized in either a conventional clutch/manual transmission system or, it can be used in an automated mechanical transmission in which the clutch and/or gear actuation is performed automatically.

The present invention includes a throttle control means which is operable in either a first mode or a second mode. In the first mode, the throttle control means maintains the engine speed at a predetermined relatively constant idle speed whenever a driver-operated accelerator pedal is in a non-actuated or idle position, and regardless of the load on the vehicle engine. Preferably, the control of the present invention includes or is utilized in conjunction with an engine control having an isochronous idle control. In the second mode, the throttle control means is operable to control the engine speed in accordance with a throttle signal received from a driver-operated accelerator pedal.

The control of the present invention includes means for sensing when the speed of the vehicle is equal to or below a predetermined minimum speed, means for sensing whether the clutch in an engaged or disengaged condition, and means for sensing whether the transmission is in a neutral position or a gear position.

In accordance with the present invention the throttle control means is maintained in the first mode whenever the accelerator pedal is depressed from the idle position and the vehicle speed is below the predetermined minimum speed, the transmission is in a gear position, and the clutch is in the disengaged condition. This prevents engine speeds above idle when starting the vehicle from rest and until the clutch is at least partially engaged.

When utilized in an automated mechanical transmission, the control of the present invention is preferably incorporated into a central processing unit which controls the engine fuel system, clutch engagement, and transmission shifting functions. The central processing unit initiates clutch engagement via a clutch actuator and prevents the engine speed from rising above a predetermined constant idle speed until the clutch is engaged.

When utilized in a conventional manually controlled clutch engagement transmission system, the vehicle accelerator pedal will be inoperative to raise the engine speed above idle during initial clutch engagement and the isochronous governor will provide sufficient engine throttle or fueling to prevent engine speed from falling below the idle speed as the clutch is engaged.

It has been found that the clutch control of the present invention is highly effective in preventing abusive clutch engagement from unskilled drivers. This greatly reduces stress on the entire drive train, and thus results in extended life of all drive train components.

The above, as well as other advantages of the present invention, will become readily apparent to one skilled in the art from reading the following detailed description of the invention in conjunction with the attached drawings.

### BRIEF DESCRIPTION OF THE DRAWINGS

Fig. 1 is a block diagram illustrating the control of the present invention when utilized in a vehicle having a conventional manually controlled clutch engagement transmission system;

Fig. 2 is a block diagram of a control system of the present invention when utilized in conjunction with an automated mechanical transmission; and

Fig. 3 is a graph which illustrates the operational characteristics of the control of the present invention.

### DESCRIPTION OF THE PREFERRED EMBODIMENT

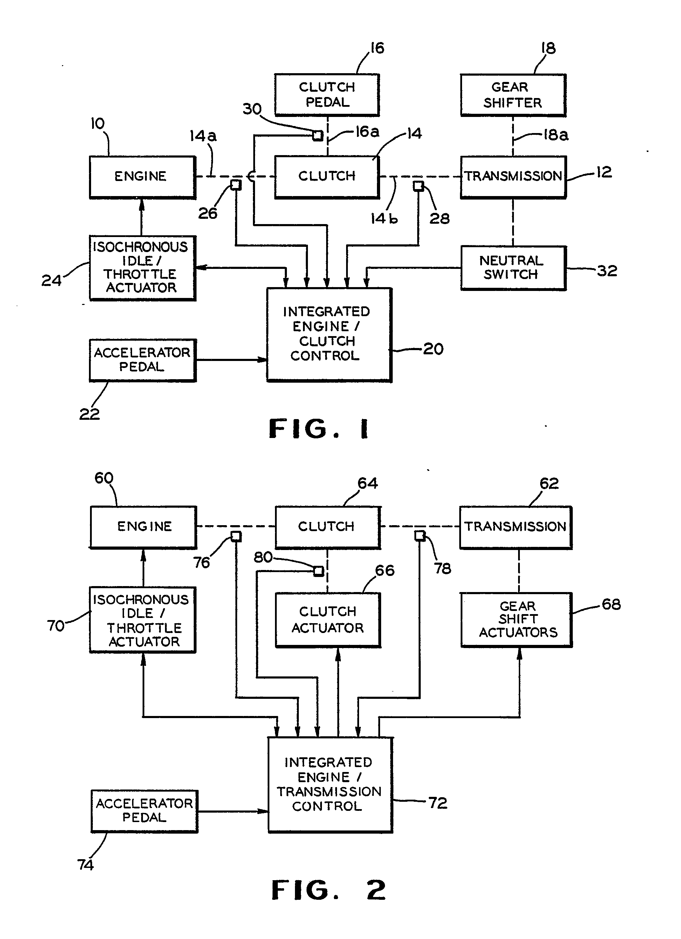

Referring to Fig. 1, there is shown in block diagram form the control system of the present invention as utilized with a conventional clutch/manual transmission system in which the vehicle driver is required to control both the operation of the vehicle clutch and the shifting of the transmission. In Fig. 1, an engine 10 is coupled to a transmission 12 through a clutch 14. The clutch 14 includes an input member 14a connected to the output of the engine 10, and an output member connected to the input of the transmission 12. While not shown in Fig. 1, the output of the transmission 12 is connected to drive selected wheels of the vehicle. A clutch pedal 16 is operatively connected to the clutch by linkage 16a and is provided to enable the vehicle driver to move the clutch 14 throughout its operating range between a fully engaged position and a fully disengaged position. A gear shifter 18 is coupled to the transmission 12 by linkage 18a and enables the driver to shift between the various transmission gear ratios.

The present invention includes an integrated engine/clutch control, represented by block 20, which functions to monitor certain operating conditions of the engine 10, the clutch 14 and the transmission 12 in order to detect an initial start condition of the vehicle. In particular, the control 20 is connected to receive a throttle signal from a vehicle accelerator pedal 22. The accelerator pedal 22 is operated by the vehicle driver and can be moved between a non-actuated or idle position to a fully depressed or full throttle condition. The clutch control 20 is connected to communicate with an isochronous idle/throttle actuator 24. The isochronous idle/throttle actuator 24 is connected to control the speed of the engine 10 in accordance with signals received from the clutch control 20. In diesel engine application, the actuator is generally connected to control the fuel delivery to the engine while, for gasoline engines, the actuator is generally connected to control the throttle opening.

When the accelerator pedal 22 is located in an idle position, the control 20 will cause the isochronous idle/throttle actuator 24 to maintain the speed of the engine at a relatively constant idle speed, regardless of the load on the engine. Normally, if the accelerator pedal 22 is depressed by the vehicle driver, the control 20 will cause the isochronous idle/throttle actuator to increase or decrease the engine speed as desired by the driver. In accordance with the present invention, when initially starting the vehicle from rest, the clutch control 20 will ignore the output signal from the accelerator pedal 22, and will control the actuator 24 in an isochronous idle mode in order to maintain the engine speed at the predetermined relatively constant idle speed until the clutch 14 has been engaged to a predetermined point.

In order to detect whether the clutch 14 has been moved to a predetermined engaged position, the present invention utilizes speed sensors 26 and 28 for detecting the speeds of the clutch input and output members 14a and 14b respectively. It will be appreciated that the signal from the input speed sensor 26 is representative of the engine speed, while the signal from the output sensor 28 is representative of the vehicle road speed. By comparing the two speeds, the control can determine the extent to which the clutch has been engaged. As an alternative to the speed sensors 26 and 28, or in addition thereto, a clutch position sensor 30 can be coupled to detect the position of either the clutch pedal 16 or other relatively movable components of the clutch 14 to determine whether the clutch is in a disengaged or an engaged condition. A neutral switch 32 is provided for detecting whether the transmission 12 is in a neutral position, or is "in gear".

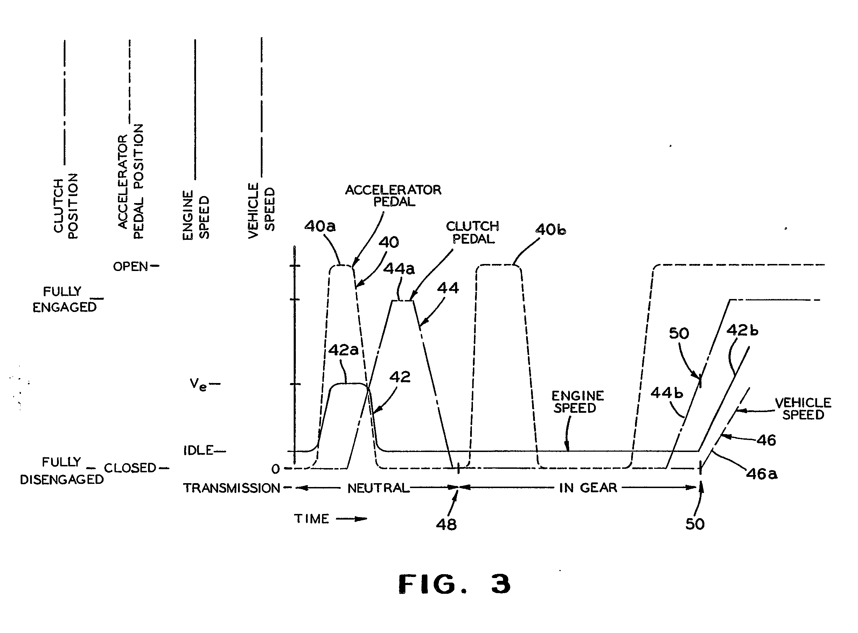

Referring now to Fig. 3, the operation of the present invention will now be discussed in more detail. In Fig. 3, a waveform 40 represents the position of the accelerator pedal, a waveform 42 represents the engine speed, a waveform 44 represents the position of the vehicle clutch pedal 16, and a waveform 46 represents the vehicle speed. When the transmission is in neutral, and the accelerator pedal is in an idle position, the engine speed will be maintained at a relatively constant idle speed by the isochronous idle control when the accelerator pedal 22 is depressed by the vehicle driver as represented by the waveform portion 40a, the engine speed will increase to a predetermined level $V_e$, as shown by the waveform portion 42a.

As long as the transmission remains in neutral, the vehicle clutch can be moved between the disengaged and engaged positions, as indicated by the waveform portion 44a, without affecting the control of the engine speed. However, once the driver has disengaged the clutch and has placed the transmission in gear at point 48, the clutch control 20 will ignore the throttle signal received from the accelerator pedal 22 and will function to maintain the engine speed at the predetermined constant idle speed until the clutch has reached a predetermined engagement point. For example, as shown in Fig. 3, if after the point 48, the driver depresses the accelerator pedal as represented by waveform portion 40b, the movement of the accelerator pedal will have no affect on the engine speed and the control 20 will function to maintain the engine speed at the predetermined constant idle speed.

As shown in Fig. 3, as the clutch is moved from a disengaged position to an engaged position along ramp portion 44b, the engine speed will remain at idle until the clutch reaches a predetermined engaged point which, in Fig. 3, is shown at point 50. When the clutch has been moved to the engaged point 50, the control returns the engine speed control to the vehicle driver via the accelerator pedal. Thus, in Fig. 3, since the accelerator pedal has been fully depressed by the vehicle driver during the clutch engagement operation as indicated by waveform portion 40c, the engine speed will increase as indicated by waveform portion 42b after the clutch has been moved past the engagement point 50. This in turn causes an increase in vehicle speed, as indicated by the waveform portion 46a.

The particular point of clutch engagement at which the control switches from an isochronous idle operating mode to a driver controlled mode will vary from application to application. In the system illustrated in Fig. 3, the clutch engagement point which signals the mode change occurs at approximately the midpoint of the ramp 44b. In other systems, it may be desirable to wait until the clutch is more fully engaged before switching to the driver-controlled mode.

The present invention can also be utilized in vehicles having an automated mechanical transmission, as shown in the block diagram of Fig. 2. In Fig. 2, an engine 60 is connected to supply power to a vehicle transmission 62 through a clutch 64. The clutch is automatically controlled by a clutch actuator 66 while the transmission gear shifting operations are automatically performed by means of gear shift actuators 68. The engine throttle and/or fuel rate is controlled by an isochronous idle/throttle actuator 70.

In Fig. 2, an integrated engine/transmission control 72 is provided for monitoring and controlling the various operating conditions of the engine 60, the clutch 64, and the transmission 62. The control 70 receives a throttle signal from an accelerator pedal 74 representing the engine speed as desired by the vehicle driver. Further, the control 72 receives signals from speed sensors 76 and 78 representing the speed of the input and output members of the clutch 64. Also, a clutch position sensor 80 can be provided for signaling the control 72 as to the position of the clutch 64.

The control system of Fig. 2 operates in a manner similar to Fig. 1 except, in Fig. 2, the clutch 64 is automatically engaged by the clutch actuator 66. As was the case with the control of Fig. 1, the integrated engine/transmission control 72 causes the isochronous idle/throttle actuator 70 to maintain the speed of the engine 60 at a relatively constant idle speed, regardless of the load on the engine 60. When the accelerator pedal is depressed by the vehicle driver, the control 72 will signal the actuator 70 to control the engine speed 60 in accordance with the position of the accelerator pedal. However, in the event the vehicle is starting from rest, the control 72 will ignore the signal from the accelerator pedal until the clutch has reached at least a predetermined engagement point. Prior to the clutch reaching the predetermined engagement point, the isochronous idle/throttle actuator 70 will maintain the engine speed at a relative constant idle speed. Thereafter, the signal from the accelerator pedal is utilized to control the engine speed.

It will be appreciated the control system of the present invention can be used with either a diesel engine or a gasoline engine. One example of an electronic engine control for a diesel engine which can incorporate the control of the present invention is manufactured by Caterpillar Tractor Co. of Peoria, Ill. under the trademark PEEC.

The present invention has been illustrated and described in what is considered to represent its preferred embodiments. However, it will be appreciated that the control can be modified without departing from the spirit or scope of the attached claims.

## Claims

1. An integrated engine/clutch control system for a vehicle including an engine, a transmission, a clutch for selectively coupling the engine to the transmission to drive the vehicle, and an accelerator pedal operable by the vehicle driver for movement from an idle position to a full throttle position, the pedal including means for generating a throttle signal representing an operator desired engine speed, said system comprising:
throttle control means operable in a first mode wherein said throttle control means maintains the vehicle engine speed at a predetermined relatively constant idle speed and operable in a second mode wherein said throttle control means is responsive to said throttle signal for controlling a vehicle throttle in accordance with said throttle signal; means for sensing when the speed of the vehicle is equal to or below a predetermined minimum vehicle speed;
means for sensing whether the clutch is in an engaged or disengaged condition;
means for sensing whether the transmission is a neutral position or a gear position;
means for maintaining said throttle control means in said first mode whenever the accelerator pedal is depressed from said idle position and the vehicle speed is below said predetermined minimum speed, the transmission is in said gear position, and the clutch is in said disengaged condition.

2. An integrated engine/clutch control system for a vehicle including an engine, a transmission, and a selectively engageable clutch for coupling the engine to the transmission to drive the vehicle, an accelerator pedal operable by the vehicle driver for movement from an idle position to a full throttle position, said pedal including means for generating a throttle signal representing an operator desired engine speed, said system comprising:
throttle control means operable in a first mode wherein said throttle control means maintains the engine speed at a predetermined relatively constant idle speed and operable in a second mode wherein said throttle control means is responsive to said throttle signal for controlling a vehicle throttle in accordance with said throttle signal;
means for sensing when the speed of the vehicle is equal to or below a predetermined minimum speed; means for sensing whether the clutch is in an engaged or disengaged condition;
means for sensing whether the transmission is in a neutral position or a gear position;

said throttle control means being operable in said first mode whenever the accelerator pedal is in said idle position, or whenever the accelerator pedal is depressed from said idle position and the vehicle speed is below said predetermined minimum speed, the transmission is in said gear position, the clutch is in said disengaged condition; and said throttle control means being operable in said second condition whenever the transmission is in said neutral position, the vehicle speed is above said predetermined minimum speed, or the clutch is in said disengaged state.

3. An integrated engine/clutch control system substantially as described herein with with reference to, and as shown in, the accompanying drawings.

16
CLUTCH
PEDAL

18
GEAR
SHIFTER

30
16a
14

10
ENGINE
14a
CLUTCH
18a

ISOCHRONOUS
IDLE /
THROTTLE
ACTUATOR
24

26
14b
28

TRANSMISSION
12

NEUTRAL
SWITCH
32

INTEGRATED
ENGINE /
CLUTCH
CONTROL
20

ACCELERATOR
PEDAL
22

FIG. I

60
ENGINE

64
CLUTCH

62
TRANSMISSION

76
80
78

ISOCHRONOUS
IDLE /
THROTTLE
ACTUATOR
70

CLUTCH
ACTUATOR
66

GEAR
SHIFT
ACTUATORS
68

INTEGRATED
ENGINE /
TRANSMISSION
CONTROL
72

ACCELERATOR
PEDAL
74

FIG. 2

EP 0 323 070 A2

CLUTCH
POSITION

ACCELERATOR
PEDAL POSITION

ENGINE
SPEED

VEHICLE
SPEED

OPEN —

FULLY
ENGAGED

ACCELERATOR
PEDAL

40a

40

44a

CLUTCH
PEDAL

40b

44

42a

Vₑ —

42

50

42b

44b

ENGINE
SPEED

VEHICLE
SPEED

IDLE —

46

FULLY — CLOSED —
DISENGAGED

0 —

46a

TRANSMISSION — ◄— NEUTRAL —►◄— IN GEAR —►

TIME —►

48

50

FIG. 3